Europäisches Patentamt

European Patent Office

Office européen des brevets

(11) Publication number: **0 456 159 A2**

# EUROPEAN PATENT APPLICATION

(21) Application number: 91107317.9

(51) Int. Cl.5: **G06F 15/24**

(22) Date of filing: **06.05.91**

(30) Priority: **07.05.90 JP 117099/90**

(43) Date of publication of application:
**13.11.91 Bulletin 91/46**

(84) Designated Contracting States:
**DE FR GB**

(71) Applicant: **FUJITSU LIMITED**
**1015, Kamikodanaka Nakahara-ku**
**Kawasaki-shi Kanagawa 211(JP)**

(72) Inventor: **Kunimaru, Masayuki**
**9130 Moss Farm Lane**
**Dallas, Texas 75243(US)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) Stock allocation system and method for parts management system.

(57) An stock allocation system for a parts management system which manages parts of products, has a host system (1) and a terminal system (2) which is coupled to the host system. The host system includes a device (3) for storing information related to various parts, and a device (5) for extracting the stored information and for transferring a parts table in response to a parts table transfer request. The terminal system includes a device (8) for storing image data related to at least developments of parts of products, a device (9, 12, PD) for displaying the development of one or a plurality of parts at least including a desired part based on the stored image data, a device (10, 13) for sending to the host system the parts table transfer request which requests a parts table related to the desired part, and a device (11) for sending allocation data related to the desired part to the host system. The device (9, 12, PD) for displaying includes a pointing device (PD) for pointing an arbitrary position on the displayed development, and a device (9, 12) for selecting the desired part depending on a position on the displayed development pointed by the pointing device.

## FIG.1

EP 0 456 159 A2

# FIG.3

TERMINAL SYSTEM

2

S1 POINT FIELD

S2 DETECT POINTED FIELD

9, 10

A1 FIELD CODE

A2 FIELD CODE

PD

S6 DISPLAY PARTS TABLE

A3 FIELD CODE

A4 FIELD CODE

TRANSFER DISPLAYED PARTS TABLE

S3 OBTAIN PARTS FORMING TABLE CODE

A1-A12345
A2-A23456

13

12

DISPLAY

S4 TRANSFER REQUEST

PARTS FORMING PARTS MASTER

PARTS MASTER

S5 PARTS TABLE

5

3

A12345-AAAAAAA
-BBBBBBB

PARTS TABLE TRANSFER PROGRAM

1 HOST SYSTEM

## BACKGROUND OF THE INVENTION

The present invention generally relates to stock allocation systems and methods, and more particularly to a stock allocation system for a parts management system and a stock allocation method.

Recently, due to the complexity of the system and the increase in the number of parts making up each product, there is a demand to simplify the retrieval process for retrieving codes of the parts. In addition, there are demands to link the code retrieval system with an edition management system and/or a stock management system.

Conventionally, when retrieving the code of a part, the code is looked up in a manual or, the code is retrieved by a code retrieval system by inputting a portion of the code of the part to a part management system.

However, the manual of the product which includes the part concerned may not exist. In addition, the operator of the code retrieval system may forget the portion of the code to be input. In such cases, it is impossible to retrieve the code of the part.

In addition, the revision number of the part cannot be detected from the manufacturer's serial number, and the management of the revision numbers requires a complex process. In other words, it is necessary to check the changes in the versions on the side of the operator.

Therefore, it conventionally requires considerable effort on the part of the operator in order to carry out a stock allocation process.

## SUMMARY OF THE INVENTION

Accordingly, it is a general object of the present invention to provide novel and useful stock allocation system and method in which the problems described above are eliminated.

Another and more specific object of the present invention is to provide a stock allocation system for a parts management system which manages parts of products, comprising a host system and a terminal system. The host system includes first means for storing information related to various parts, and second means, coupled to the first means, for extracting the information from the first means and for transferring a parts table in response to a parts table transfer request. The terminal system is coupled to the host system and includes third means for storing image data related to at least developments of parts of products, fourth means, coupled to the third means, for displaying the development of one or a plurality of parts at least including a desired part based on the image data stored in the third means, fifth means, coupled to the fourth means, for sending to the host system the parts table transfer request which requests a parts table related to the desired part, and sixth means for sending allocation data related to the desired part to the host system. The fourth means includes pointing means for pointing an arbitrary position on the displayed development, and selecting means for selecting the desired part depending on a position on the displayed development pointed by the pointing means. According to the stock allocation system of the present invention, it is easy to carry out the stock allocation process for a part which is required to repair a product, for example. In addition, the revision numbers can be managed by simply renewing the contents of the parts master in correspondence with the revised editions.

Still another object of the present invention is to provide a stock allocation method for a parts management system which manages parts of products, comprising the steps of storing information related to various parts in a host system, extracting the stored information and transferring a parts table in response to a parts table transfer request in the host system, storing image data related to at least developments of parts of products in a terminal system which is coupled to the host system, displaying the development of one or a plurality of parts at least including a desired part based on the stored image data in the terminal system, sending to the host system the parts table transfer request which requests a parts table related to the desired part, and sending allocation data related to the desired part to the host system, where the step (d) points an arbitrary position on the displayed development by a pointing means and selects the desired part depending on a position on the displayed development pointed by the pointing means.

Other objects and further features of the present invention will be apparent from the following detailed description when read in conjunction with the accompanying drawings.

## BRIEF DESCRIPTION OF THE DRAWINGS

FIG.1 is a system block diagram for explaining an operating principle of stock allocation system and method according to the present invention;
FIG.2 is a flow chart for explaining the operation of the system shown in FIG.1;
FIG.3 is a diagram for explaining a first embodiment of the stock allocation system according to the present invention;
FIG.4 is a diagram for explaining a second embodiment of the stock allocation system according to the present invention;
FIG.5A and 5B are flow charts for explaining the stock allocation process of the embodiments of the stock allocation system according to the present invention.

## DESCRIPTION OF THE PREFERRED EMBODIMENTS

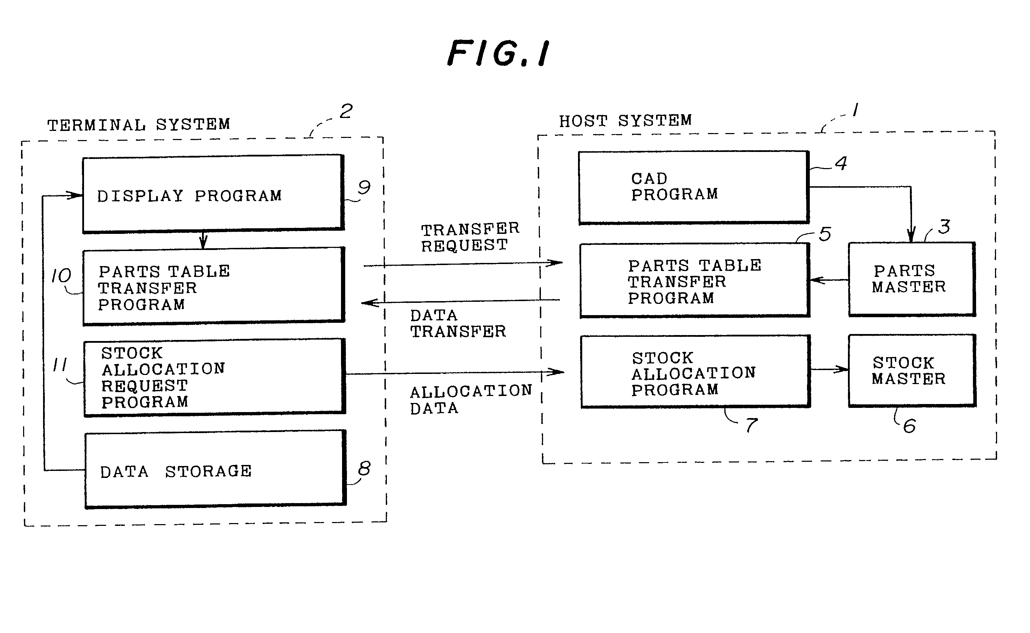

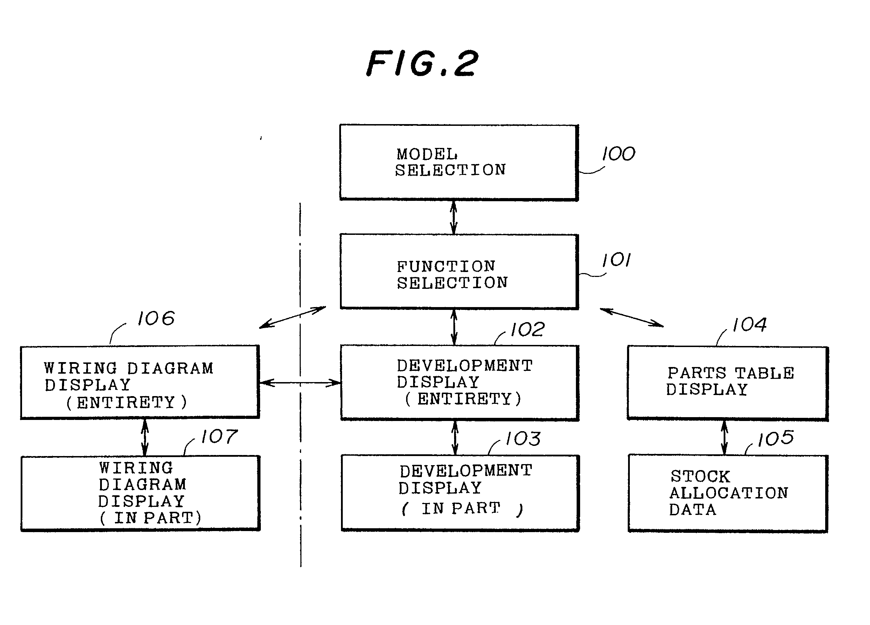

First, a description will be given of an operating principle of stock allocation system and method according to the present invention, by referring to FIGS.1 and 2.

In FIG.1, a terminal system 2 is coupled to a host system 1. The host system 1 includes a parts master 3, a computer aided design (CAD) program 4, a parts table transfer program 5, a stock master 6, and a stock allocation program 7. On the other hand, the terminal system 2 includes a development/wiring data 8 storage, a development/wiring display program 9, a parts table transfer program 10, and a stock allocation request program 11.

In the host system 1, the parts master 3 stores information related to various parts. For example, the contents of the parts master 3 are updated together with revised edition information every time the version of each part is revised by the CAD program 4. The parts table transfer program 5 extracts and transfers the contents of the parts master 3. The stock master 6 stores information related to the stock of the parts. The stock allocation program 7 makes a stock allocation process by referring to the contents of the stock master 6 and the like.

In the terminal system 2, the development/wiring data storage 8 stores image data related to each of the various products and parts. The development/wiring display program 9 displays the picture of the product or part on a display (not shown) based on the contents of the development/wiring data storage 8. The parts table transfer program 10 makes a parts table transfer request. In addition, the stock allocation request program 11 sends allocation data with respect to the host system 1.

Although not directly related to the subject matter of the present invention, the development/wiring data storage 8 also stores wiring diagrams of the products for repairing the products. Hence, the development/wiring display program 9 also has the function of displaying the wiring diagram in addition to the development.

At the terminal system 2, the product number of the product which is to be repaired, for example, is input to display a model selection menu in a step 100 shown in FIG.2. Then, a function selection menu is displayed in a step 101. After the step 101, tone of steps 102, 104 and 106 is selected. A development of the product concerned is displayed in the step 102. A parts table of the parts making up the product concerned is directly displayed in the step 104. Although not directly related to the subject matter of the present invention, a wiring diagram is displayed in the step 106.

For the sake of convenience, it will be assumed that the development of the product concerned is to be displayed in the step 102. In this case, the entire development of the product concerned is displayed in the step 102. Specific portions of the product concerned may be displayed on an arbitrary enlarged scale in a step 103 if necessary. These processes are carried out when the display program 9 shown in FIG.1 reads and displays the contents of the data storage 8.

When the operator uses a pointing device, for example, to point a portion of the screen when the display is made in the step 102 or 103, the parts table transfer program 10 shown in FIG.1 makes a parts table transfer request with respect to the host system 1 so as to receive the parts table.

At the host system 1, the parts table transfer program 5 refers to the parts master 3 and transfers the desired parts table to the terminal system 2 based on the parts table transfer request which is received from the terminal system 2. Of course, when the version is revised for a product or part, the details of the revision is stored in the parts master 3. The parts table transfer request includes revision number information which specifies the desired version, and the parts table which is transferred to the terminal system 2 is related to the desired version.

The parts table which is transferred from the host system 1 to the terminal system 2 is a kind of code table which includes codes of the related product and parts, and this parts table is displayed on the display in the step 104 shown in FIG.2. In this state, when the operator points a code on the screen, the stock allocation request program 11 shown in FIG.1 sends allocation data to the host system 1 in a step 105 shown in FIG.2.

At the host system 1, the stock allocation program 7 shown in FIG.1 is started in response to the allocation data received from the terminal system 2. The stock allocation program 7 refers to the stock master 6 and carries out a stock allocation process for the desired part.

The step 106 shown in FIG.2 displays the wiring diagram in its entirety, and a step 107 displays a portion of the wiring diagram on an enlarged scale.

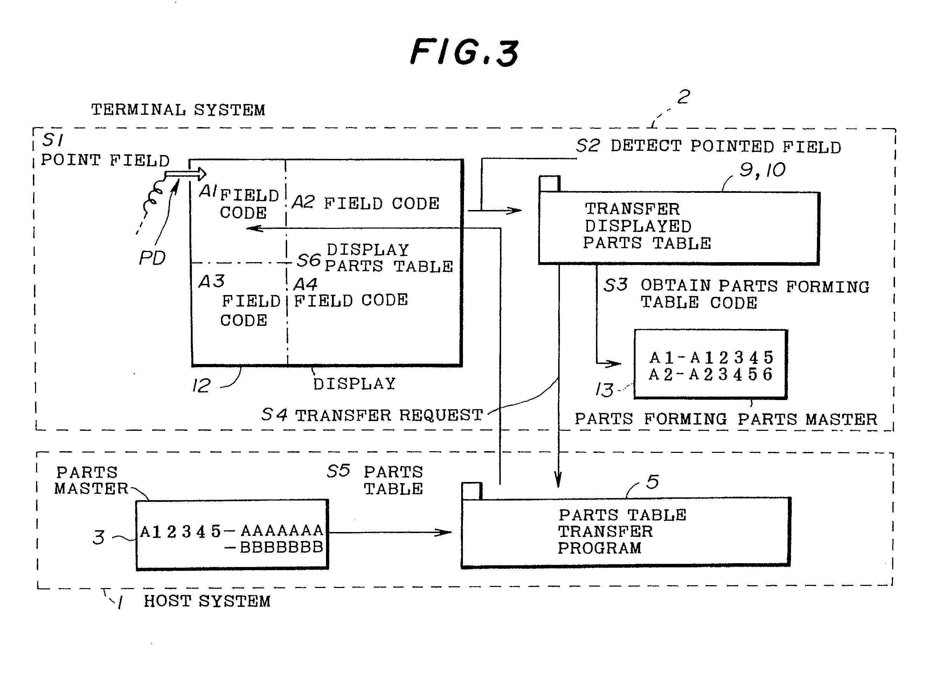

Next, a description will be given of a first embodiment of the stock allocation system according to the present invention, by referring to FIG.3. In FIG.3, those parts which are essentially the same as those corresponding parts in FIG.1 are designated by the same reference numerals, and a description thereof will be omitted.

In FIG.3, the terminal system 2 includes a display 12 and a parts forming table master 13. For the sake of convenience, it will be assumed that the display made in the step 103 shown in FIG.2 is displayed on the display 12, that is, a specific portion of the development is displayed on an arbitrary enlarged scale.

For example, the display 12 is sectioned into four fields A1 through A4. When the operator points the field A1 by a pointing device PD in a step S1 when the image of the desired part or the parts including the desired part is displayed on the display 12, the display program 9 detects the pointed field A1 in a step S2 and sends to the parts table transfer program 10 a field code which identifies the pointed field A1.

The parts table transfer program 10 refers to the parts forming table master 13 using the field code and the revision number information as keys, and obtains a parts forming table code in a step S3. This parts forming table code is "A12345" as shown in FIG.3, for example. The parts forming table code "A12345" is sent from the parts table transfer program 10 to the host system 1 in a step S4.

The parts forming table code is the information which is sufficient to specify the part code for one or a plurality of parts displayed in the field A1 of the display 12, and the display in the field A1 and the contents of the parts forming table master 13 correspond. In addition, when the version is unspecified, the parts forming table code which is obtained is either the parts forming table code corresponding to the newest version or the parts forming table code corresponding to all versions. A setting may be made in advance to obtain the parts forming table code corresponding to the newest version or the parts forming table code corresponding to all the versions.

The parts table transfer program 5 of the host system 1 receives the parts forming table code and extracts a corresponding parts table by referring to the parts master 3 in a step S5. For example, the parts table has a part code "AAAAAAA" for a first part and a part code "BBBBBBB" for a second part. The extracted parts table is transferred to the terminal system 2 and is displayed on the display 12 in a step S6.

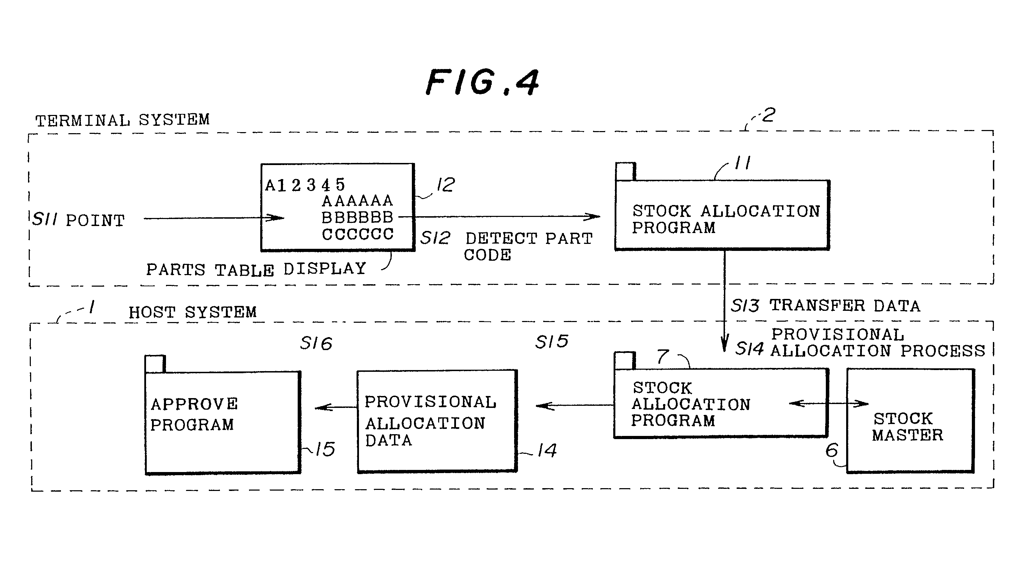

Next, a description will be given of a second embodiment of the stock allocation system according to the present invention, by referring to FIG.4. In FIG.4, those parts which are essentially the same as those corresponding parts in FIGS.1 and 2 are designated by the same reference numerals, and a description thereof will be omitted.

In FIG.4, the terminal system 2 includes the display 12, and the host system 1 includes a provisional allocation data 14 and an approve program 15. The approve program 15 reserves the parts which are managed in advance for the stock. Hence, the approve program 15 confirms the stock in the storage in response to the allocation request, gives approval to this request, and secures the stock.

For the sake of convenience, it will be assumed that the part code "AAAAAAA", "BBBBBBB", "CCCCCCC", ... of the parts table are displayed on the display 12 by the process described above in conjunction with FIG.3. In this state, when the operator points the part code "BBBBBBB" in a step S11, for example. In this case, the pointed part code "BBBBBBB" is detected in a step S12 and is notified to the stock allocation request program 11. The stock allocation request program 11 notifies the part having the part code "BBBBBBB" and the required number thereof to the stock allocation program 7 in a step S13.

The stock allocation program 7 makes a stock allocation process by referring to the stock master 6, but the stock allocation process is carried out in the form of a provisional stock allocation until an approval is received. In other words, a provisional stock allocation process is carried out in a step S14. In addition, the provisional allocation data 14 is formed in a step S15, and this provisional allocation data 14 is transferred to the approve program 15 in a step S16.

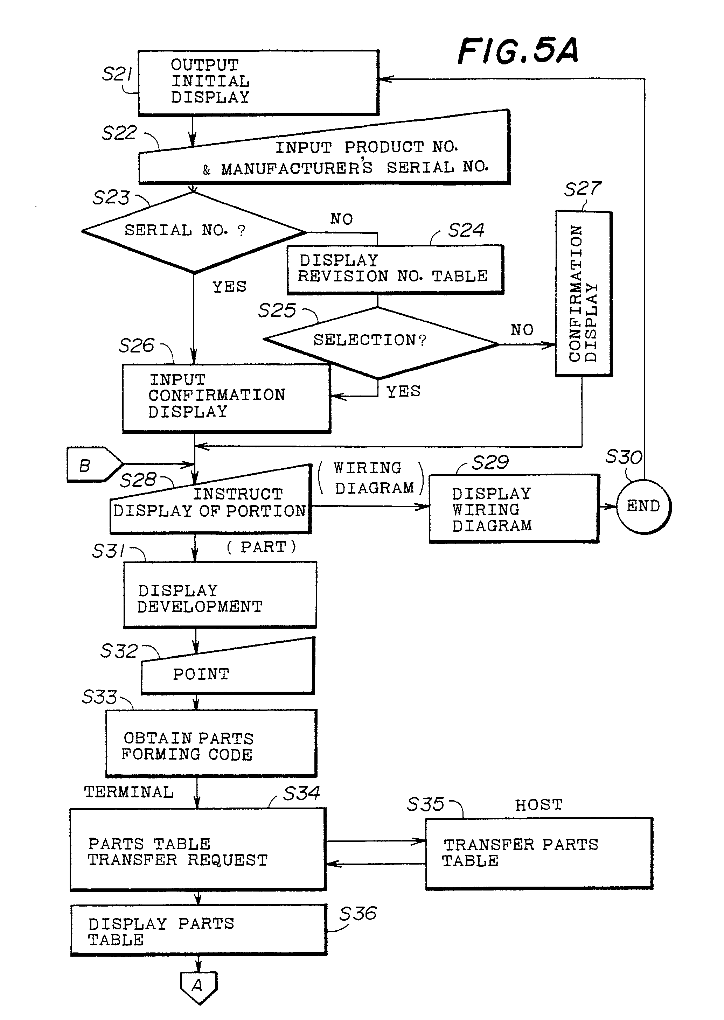

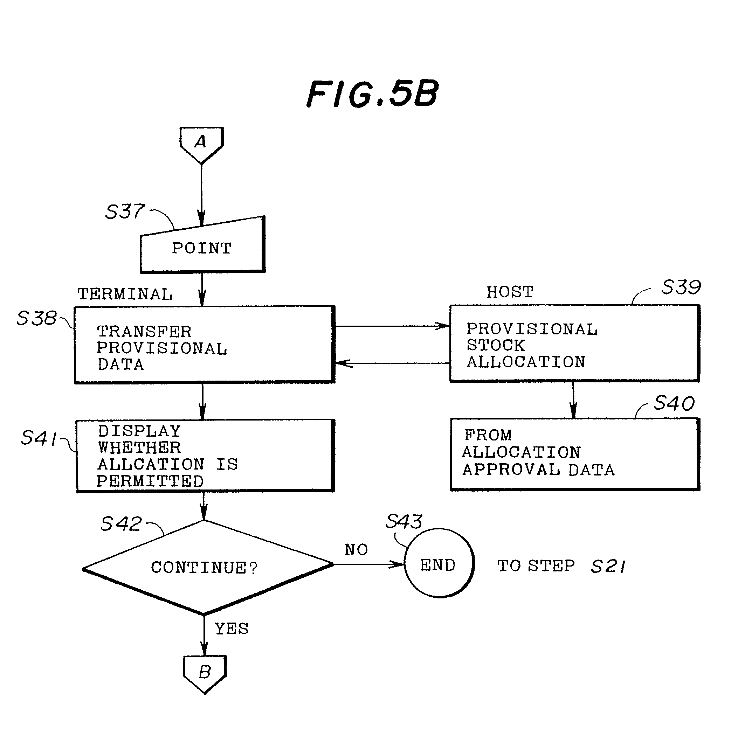

Next, a description will be given of the stock allocation process of the embodiments described above, by referring to FIGS.5A and 5B. FIGS.5A and 5B correspond to an embodiment of the stock allocation method according to the present invention.

In FIG.5A, a step S21 outputs an initial display. A step S22 inputs the product number and the manufacturer's serial number. The revision number of the desired part can be judged from the manufacturer's serial number. A step S23 checks whether or not the manufacturer's serial number is provided. When the judgement result in the step S23 is NO, the revision number cannot be detected, and thus, a step S24 displays a revision number table. In addition, a step S25 checks whether or not an input was made to select one of the versions. On the other hand, when the judgement result in the step S23 is YES or after the step S25, a step S26 makes an input confirmation display. A step S27 makes a confirmation display when the judgement result in the step S25 is NO.

After the step S26 or S27, a step S28 instructs a display of a portion of a desired part or a wiring diagram. When the display cf the wiring diagram is instructed in the step S28, a step S29 displays the wiring diagram and the process ends in a step S30, so as to return to the step S21 to output the initial display.

On the other hand, when the display of the portion of the desired part is instructed in the step S28, a step S31 displays a development of the portion in the display of the desired part. A step S32 points a field of the display, and a step S33 obtains a parts forming table code using the pointed field as the key. A step S34 makes a parts table transfer request. A step S35 retrieves the parts master and transfers the parts table, and a step S36 displays the parts table.

In FIG.5B, a step S37 points a desired part on the displayed parts table after the step S36 shown in FIG.5A. A step S38 transfers the provisional allocation data, and a step S39 carries out the stock allocation process. A step S40 forms an allocation approve data, and a step S41 displays whether or not the allocation is permitted. Then, a step S42 checks whether or not a further process is to continue, and the process continues to the step S18 shown in FIG.5A when the judgement result in the step S42 is YES. On the other hand, when the judgement result in the step S42 is NO, the process ends in a step S43, so as to return to the step S21 shown in FIG.5A to output the initial display.

The data storage 8 of the terminal system 2 is desirably an optical disk unit.

Therefore, according to the stock allocation system of the present invention, it is easy to carry out the stock allocation process for a part which is required to repair a product, for example. In addition, the revision numbers can be managed by simply renewing the contents of the parts master in correspondence with the revised editions.

The data storage 8 is provided in the terminal system 2 for the following reasons. First, if the data storage 8 were provided in the host system 1, an extremely large quantity of information would have to be transferred when transferring the image data to the terminal system 2, and this would increase both the transfer time and the cost of the stock allocation system. Second, because the data storage 8 is provided in the terminal system 2, the host system 1 simply needs to manage only the code data. Third, the equipment required to register the data related to the developments and wiring diagrams in the data storage 8 (for example, optical disk unit) are of course provided in the host system 1, but the optical disk of the optical disk unit is detachably mounted. For this reason, the optical disk already containing the registered data can be mounted in the optical disk unit of the terminal system 2, and the scale of equipment and management system required in the host system 1 for registering the data in the optical disk is not very large.

Moreover, when the provisional stock allocation process is carried out, the control of the stock management will not be disturbed even when the stock management is made by an independent system. In addition, since the provisional allocation data is formed, there is no need to make a second input when carrying out the allocation.

When specifying the revision number at the beginning, it is possible to display the development for the desired version. Even in a case where no revision number is specified, it is of course possible to retrieve the revision number by inputting the manufacturer's serial number, the data of production and the like.

Further, the present invention is not limited to these embodiments, but various variations and modifications may be made without departing from the scope of the present invention.

Reference signs in the claims are intended for better understanding and shall not limit the scope.

**Claims**

1. A stock allocation system for a parts management system which manages parts of products, characterized in that there are provided: a host system (1) including first means (3) for storing information related to various parts, and second means (5), coupled to said first means, for extracting the information from said first means and for transferring a parts table in response to a parts table transfer request; and a terminal system (2) coupled to said host system and including third means (8) for storing image data related to at least developments of parts of products, fourth means (9, 12, PD), coupled to said third means, for displaying the development of one or a plurality of parts at least including a desired part based on the image data stored in said third means, fifth means (10, 13), coupled to said fourth means, for sending to said host system the parts table transfer request which requests a parts table related to the desired part, and sixth means (11) for sending allocation data related to the desired part to said host system; and that said fourth means includes pointing means (PD) for pointing an arbitrary position on the displayed development, and selecting means (9) for selecting the desired part depending on a position on the displayed development pointed by said pointing means.

2. The stock allocation system as claimed in claim 1, characterized in that said fourth means (9, 12, PD) produces a field code which corresponds to a field on the displayed development pointed by said pointing means (PD), and said fifth means (10, 13) forms a parts forming table code based on revision number information related to a revision number of the desired part and makes the parts table transfer request in response to the field code using the parts forming table code, said parts forming table code including information sufficient to specify each part code of one or a plurality of parts displayed within the pointed field.

3. The stock allocation system as claimed in claim 1 or 2, characterized in that said host system (1) further includes seventh means (6) for storing information related to stock of the parts of the products.

4. The stock allocation system as claimed in claim 3, characterized in that said host system (1) further includes eighth means (7), coupled to said seventh means (6), for carrying out a provisional stock allocation process based on the allocation data received from said terminal system (2) by referring to the information stored in said seventh means.

5. The stock allocation system as claimed in claim 4, characterized in that said eighth means (7) carries out the provisional stock allocation process until an acknowledgement is received.

6. The stock allocation system as claimed in any of claims 1 to 5, characterized in that said fourth means (9, 12, PD) displays the development of the desired part on an arbitrary enlarged scale.

7. The stock allocation system as claimed in claim 1, characterized in that said host system (1) further includes seventh means (4), coupled to said first means (3), for renewing the information stored in said first means every time a version of each part is revised, said information including revision number information related to a revision number of each part.

8. The stock allocation system as claimed in claim 7, characterized in that said fourth means (9, 12, PD) produces a field code which corresponds to a field on the displayed development pointed by said pointing means (PD), and said fifth means (10, 13) forms a parts forming table code in response to the field code using the field code and the revision number information related to the desired part as keys and makes the parts table transfer request using the parts forming table code, said parts forming table code including information sufficient to specify each part code of one or a plurality of parts displayed within the pointed field.

9. A stock allocation method for a parts management system which manages parts of products, characterized in that said stock allocation method comprises the steps of:

(a) storing information related to various parts in a host system (1);

(b) extracting the stored information and transferring a parts table in response to a parts table transfer request in the host system;

(c) storing image data related to at least developments of parts of products in a terminal system (2) which is coupled to the host system;

(d) displaying the development of one or a plurality of parts at least including a desired part based on the stored image data in the terminal system;

(e) sending to the host system the parts table transfer request which requests a parts table related to the desired part; and

(f) sending allocation data related to the desired part to the host system,

said step (d) pointing an arbitrary position on the displayed development by a pointing means (PD) and selecting the desired part depending on a position on the displayed development pointed by said pointing means.

10. The stock allocation method as claimed in claim 9, characterized in that said step (d) produces a field code which corresponds to a field on the displayed development pointed by said pointing means (PD), and said step (e) forms a parts forming table code based on revision number information related to a revision number of the desired part and makes the parts table transfer request in response to the field code using the parts forming table code, said parts forming table code including information sufficient to specify each part code of one or a plurality of parts displayed within the pointed field.

11. The stock allocation method as claimed in claim 9 or 10, characterized in that there is further provided the step of (g) storing information related to stock of the parts of the products in the host system (1).

12. The stock allocation method as claimed in claim 11, characterized in that there is further provided the step of (h) carrying out a provisional stock allocation process in the host system (1) based on the allocation data received from the terminal system by referring to the stored information stored in said step (g).

11 EP 0 456 159 A2 12

**13.** The stock allocation method as claimed in claim 12, characterized in that said step (h) carries out the provisional stock allocation process until an acknowledgement is received.

**14.** The stock allocation method as claimed in any of claims 9 to 13, characterized in that said step (d) displays the development of the desired part on an arbitrary enlarged scale.

**15.** The stock allocation method as claimed in claim 9, characterized in that there is further provided the step of (g) renewing the information stored in said step (a) in the host system (1) every time a version of each part is revised, said information including revision number information related to a revision number of each part.

**16.** The stock allocation method as claimed in claim 15, characterized in that said step (d) produces a field code which corresponds to a field on the displayed development pointed by said pointing means (PD), and said step (e) forms a parts forming table code in response to the field code using the field code and the revision number information related to the desired part as keys and makes the parts table transfer request using the parts forming table code, said parts forming table code including information sufficient to specify each part code of one or a plurality of parts displayed within the pointed field.

8

FIG.I

## FIG.2

```
                                    ┌──────────────┐
                                    │   MODEL      │ ╭ 100
                                    │  SELECTION   │
                                    └──────┬───────┘
                                           ↕
                                    ┌──────────────┐
                                    │  FUNCTION    │ ╭ 101
                                    │  SELECTION   │
                                    └──────────────┘
              ╭ 106                      ↕      ╭ 102              ╭ 104
     ┌──────────────────┐        ┌──────────────┐        ┌──────────────┐
     │ WIRING DIAGRAM   │ ←→     │ DEVELOPMENT  │ ←→     │ PARTS TABLE  │
     │ DISPLAY          │        │ DISPLAY      │        │ DISPLAY      │
     │  ( ENTIRETY )    │        │ ( ENTIRETY)  │        │              │
     └──────────────────┘        └──────────────┘        └──────────────┘
              ↕   ╭ 107                  ↕   ╭ 103               ↕   ╭ 105
     ┌──────────────────┐        ┌──────────────┐        ┌──────────────┐
     │ WIRING           │        │ DEVELOPMENT  │        │ STOCK        │
     │ DIAGRAM          │        │ DISPLAY      │        │ ALLOCATION   │
     │ DISPLAY          │        │ ( IN PART )  │        │ DATA         │
     │ ( IN PART)       │        └──────────────┘        └──────────────┘
     └──────────────────┘
```

EP 0 456 159 A2

# FIG.3

TERMINAL SYSTEM

2

S1 POINT FIELD

S2 DETECT POINTED FIELD

9,10

A1 FIELD CODE    A2 FIELD CODE

PD

S6 DISPLAY PARTS TABLE

A3 FIELD CODE    A4 FIELD CODE

TRANSFER DISPLAYED PARTS TABLE

S3 OBTAIN PARTS FORMING TABLE CODE

12    DISPLAY

A1-A12345
A2-A23456

13

S4 TRANSFER REQUEST

PARTS FORMING PARTS MASTER

PARTS MASTER

S5 PARTS TABLE

5

3    A12345-AAAAAAA
-BBBBBBB

PARTS TABLE TRANSFER PROGRAM

1  HOST SYSTEM

EP 0 456 159 A2

# FIG.4

EP 0 456 159 A2

TERMINAL SYSTEM ⟋2

```
A12345
   AAAAAA        12
   BBBBBB
   CCCCCC     S12  DETECT PART
                   CODE
```

S11 POINT

PARTS TABLE DISPLAY

STOCK ALLOCATION PROGRAM ⟋11

S13 TRANSFER DATA

HOST SYSTEM ⟋1

S16        S15

PROVISIONAL S14 ALLOCATION PROCESS

APPROVE PROGRAM ~15

PROVISIONAL ALLOCATION DATA ~14

STOCK ALLOCATION PROGRAM 7

STOCK MASTER 6

# FIG.5A

S21 — OUTPUT INITIAL DISPLAY

S22 — INPUT PRODUCT NO. & MANUFACTURER'S SERIAL NO.

S23 — SERIAL NO. ?

NO → S24 — DISPLAY REVISION NO. TABLE

YES

S25 — SELECTION?

NO → S27 — CONFIRMATION DISPLAY

YES → S26 — INPUT CONFIRMATION DISPLAY

B

S28 — INSTRUCT DISPLAY OF PORTION

( WIRING DIAGRAM ) → S29 — DISPLAY WIRING DIAGRAM → S30 — END

( PART )

S31 — DISPLAY DEVELOPMENT

S32 — POINT

S33 — OBTAIN PARTS FORMING CODE

TERMINAL

S34 — PARTS TABLE TRANSFER REQUEST

HOST

S35 — TRANSFER PARTS TABLE

S36 — DISPLAY PARTS TABLE

A

13

# FIG.5B

```
                    ┌──┐
                    │ A│
                    └┬─┘
                     │
  S37              ┌─▼──────────┐
                   │   POINT    │
                   └─┬──────────┘
                     │
 TERMINAL            │              HOST              S39
  S38  ┌─────────────▼──┐         ┌──────────────────┐
       │  TRANSFER      │────────▶│  PROVISIONAL     │
       │  PROVISIONAL   │         │  STOCK           │
       │  DATA          │◀────────│  ALLOCATION      │
       └─────────┬──────┘         └─────────┬────────┘
                 │                          │         S40
  S41  ┌─────────▼──────┐         ┌─────────▼────────┐
       │  DISPLAY       │         │  FROM            │
       │  WHETHER       │         │  ALLOCATION      │
       │  ALLCATION IS  │         │  APPROVAL DATA   │
       │  PERMITTED     │         └──────────────────┘
       └─────────┬──────┘
                 │              S43
  S42         ◇──▼──◇    NO    ╭─────╮
             ◇         ◇──────▶│ END │   TO STEP  S2I
             ◇CONTINUE? ◇      ╰─────╯
              ◇        ◇
                 ◇──┬──◇
                    │ YES
                  ┌─▼─┐
                  │ B │
                  └───┘
```

EP 0 456 159 A2